# FASCICULE DE BREVET EUROPEEN

(11) **EP 1 162 110 B1**
(45) Date de publication et mention de la délivrance du brevet: **13.07.2005**
(21) Numéro de dépôt: 01420126.3
(22) Date de dépôt: 06.06.2001
(51) Int. Cl.: B60P 1/28

(54) **Camion avec une benne basculable**
Lastfahrzeug mit kippbarer Mulde
Truck with tipping bucket

(30) Priorité: 06.06.2000 FR 0007382
(43) Date de publication de la demande: 12.12.2001
(73) Titulaire: F.B.I., 42600 Champdieu (FR)
(72) Inventeur: Bourrin, Jean Francois, 42600 Ecotay L'Olme (FR)
(74) Mandataire: Dupuis, François

(56) Documents cités:
- EP-A- 0 749 870
- CH-A- 416 346
- DE-U- 7 139 721
- FR-A- 2 087 539
- FR-A- 2 768 974

## Description

L'invention se rattache au secteur technique des camions agencés pour la réception de bennes, comme par exemple le camion révélé dans le document FR 2 087 539, de la manutention des bennes et, tout particulièrement, des moyens qui permettent le positionnement des bennes sur le châssis du camion, puis leur relevage pour l'évacuation de la charge transportée.

Généralement, les bennes de camion sont assujetties à un ou des ensembles de vérins hydrauliques qui permettent leur basculement ou leur positionnement à l'horizontal sur le châssis du camion.

Le Demandeur a développé plusieurs systèmes de ce type dans lequel le vérin est solidarisé par son fût à l'avant du transporteur, tandis que l'extrémité de la tige du vérin en développement est solidarisée au côté transversal avant de la benne. Ce système fonctionne normalement mais présente certains inconvénients en ce qu'il exige une puissance de vérin importante pour permettre ledit basculement. En outre, le positionnement du vérin éloigné du centre de gravité du camion exige l'utilisation de moyens complémentaires de compensation de charge et d'équilibre. On note également l'existence de secousses substantielles lors du fonctionnement du vérin télescopique lors du relevage de la benne, ce qui est nuisible à la stabilité du camion.

Il est connu également d'utiliser des vérins disposés latéralement et extérieurement à la benne de chaque côté et, par exemple, sur des tombereaux. Dans ce cas, la tige de vérin est solidarisée à la partie supérieure de la benne, dans sa partie médiane, tandis que son fût est situé et solidarisé dans la partie avant du tracteur. Dans ce cas également, il est nécessaire d'avoir des vérins de forte puissance pour assurer le déplacement et le basculement de la benne. En outre, le poids de la benne est mal réparti sur le châssis du camion, de sorte que là également, il faut utiliser des moyens complémentaires d'équilibre et de compensation de charge, avec souvent des effets de vrillage du châssis.

On connaît par le brevet FR 2087539 le positionnement de vérins latéraux et extérieurs à la benne disposée au milieu du double essieu de la benne.

La démarche du Demandeur a donc été d'examiner un positionnement différent des axes d'articulation du ou des vérins permettant le basculement de la benne et son positionnement, tout en améliorant la répartition de charge sur le châssis du camion.

Un autre but recherché selon l'invention était d'améliorer la stabilité du châssis du camion récepteur de la benne, afin d'éviter ou de réduire tout effet de vrillage dudit châssis lors des mouvements de la benne.

Ces buts et d'autres encore ressortiront bien de la suite de la description.

Selon une première caractéristique de l'invention, le camion est du type comprenant un châssis autorisant le positionnement d'une benne et deux vérins hydrauliques autorisant les mouvements de ladite benne, et un dispositif d'articulation de la benne incluant deux vérins disposés latéralement et extérieurement à la benne, l'extrémité du fût des vérins étant disposée au milieu du double essieu arrière du camion, l'extrémité de la tige du vérin étant solidarisée dans la partie supérieure et bordure de la benne, dans sa partie médiane, et est remarquable en ce que le camion comprend un faux châssis pour assurer la fonction de support par une poutre transversale et de longerons longitudinaux d'une embase solidarisée au fond de la benne, sur tout ou partie de la longueur de celle-ci.

Ces caractéristiques et d'autres encore ressortiront bien de la suite de la description.

L'invention est exposée ci-après plus en détail à l'aide des figures des dessins annexés dans lesquels :

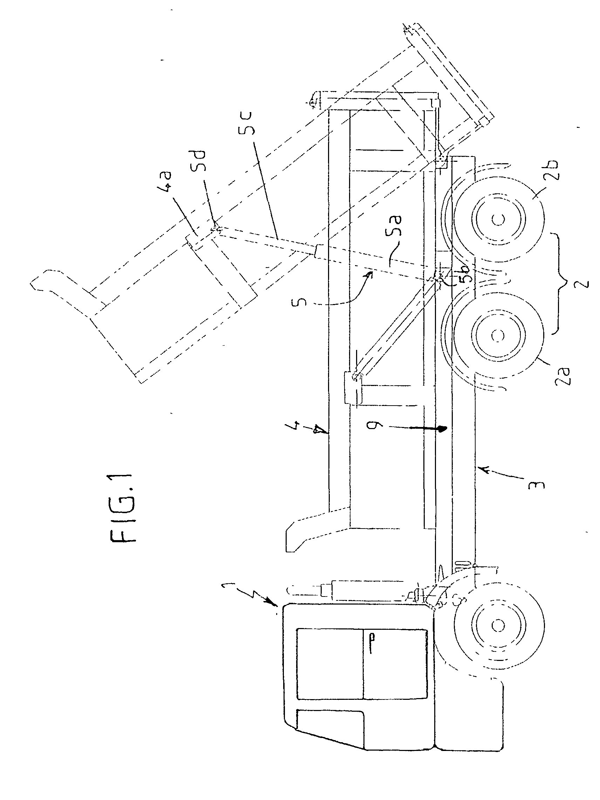

- la figure 1 est une vue de côté illustrant le positionnement du dispositif d'articulation de la benne selon l'invention, avec la représentation de la benne soit en position basculée, soit en position d'attente ;

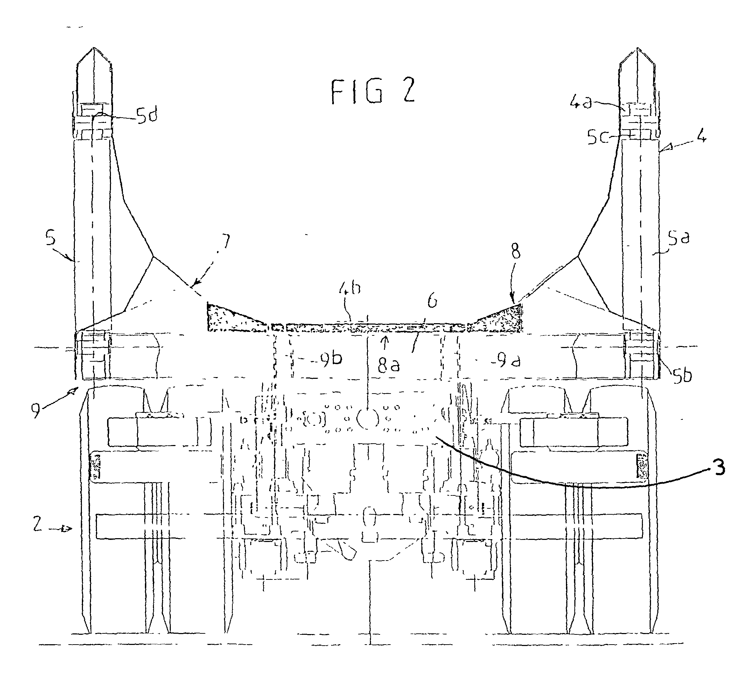

- la figure 2 est une vue de face arrière illustrant la configuration de la benne et de son embase associée pour être positionnée sur la poutre du châssis du camion ;

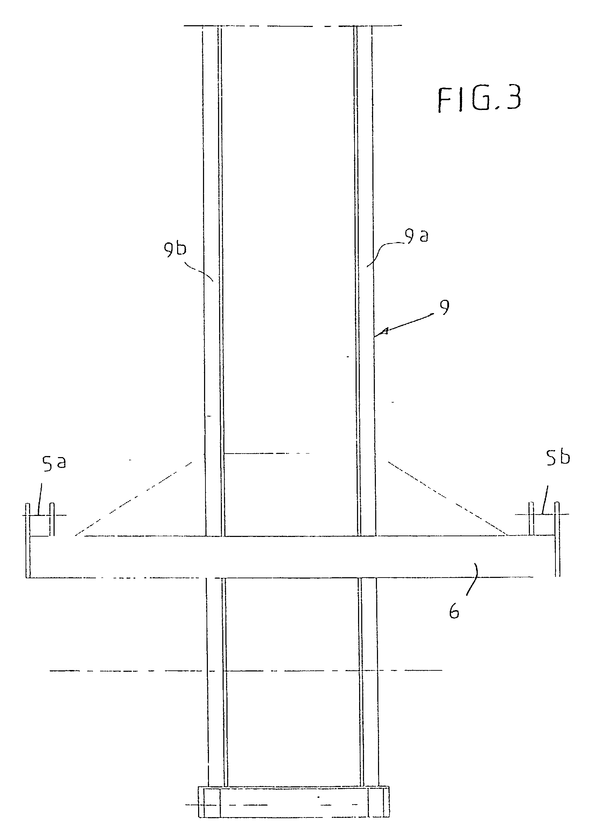

- la figure 3 est une vue de dessus du faux châssis basculant du camion,

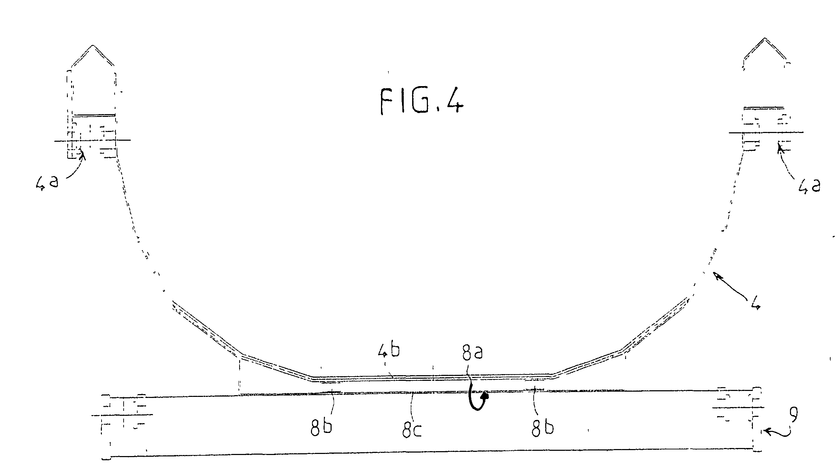

- la figure 4 est une vue en coupe transversale de la benne avec l'embase associée.

Afin de rendre plus concret l'objet de l'invention, on le décrit maintenant d'une manière non limitatives illustrées aux figures des dessins.

Le camion est représenté dans son ensemble par (1), est de tout type et de toute marque. Il comprend en particulier un double essieu arrière (2) avec les roues (2a) (2b). Son châssis (3) est susceptible de permettre l'articulation de la benne (4).

Selon l'invention, les vérins hydrauliques (5), qui sont susceptibles de permettre le basculement de la benne, sont agencés de manière que leur fût (5a) soit solidarisé à leur extrémité (5b), d'une manière fixe et articulée, sur le châssis du camion, à l'endroit spécifique du milieu du double essieu arrière, en permettant un abaissement du centre de gravité. La tige (5c) du vérin est solidarisée, à son extrémité (5d), sur la partie supérieure et bordure (4a) de la benne (4). Ainsi, par cette disposition particulière des vérins (5), on obtient un meilleur équilibre de charge, une plus grande stabilité lors des mouvements de la benne, et une suppression substantielle des effets de secousse lors du développement de la tige télescopique du vérin. Le centre de gravité de basculement de la benne est ainsi situé au niveau du double essieu arrière, ce qui permet la sélection de vérins et de systèmes de pompes hydrauliques associées de moindre puissance, et donc de meilleur coût.

Par ailleurs et en combinaison, le camion reçoit, à partir de son châssis (3), un faux châssis (9) qui assure la fonction de support, par la poutre transversale (6) et des longerons longitudinaux (9a - 9b), des moyens de support d'une embase (8) solidaire du fond de la benne. Cette embase est disposée sur tout ou partie de la longueur de la benne, en étant solidarisée par soudage ou autre. Elle est donc de grande longueur et vient en appui sur la ou les poutres transversales du faux châssis et les longerons lorsque la benne est abaissée. Elle présente une face plane (8a) en appui direct sur la poutre et les longerons. Des longerons intérieurs (8b) sont disposés à l'intérieur du volume de l'embase dans la longueur et sont fixés par soudure ou autre à la paroi de fond longitudinale (8c) de l'embase et à la paroi de fond (4b) de la benne. Ils contribuent à la rigidité de l'ensemble.

Ainsi, selon cette disposition de l'invention, on diminue de manière substantielle les effets de vrillage éventuel du châssis du camion et de la benne. Cette embase permet également de protéger le fond de benne et de rendre invisible les impuretés de chocs sur la tôle du fond de la benne.

Ainsi, selon l'invention, le camion équipé en combinaison de ces différents moyens et caractéristiques, offre un meilleur confort dans la manipulation et commande de la benne, avec une meilleure répartition de charge.

## Revendications

1. Camion comprenant un châssis (3) autorisant le positionnement d'une benne et deux vérins hydrauliques autorisant les mouvements de ladite benne, et un dispositif d'articulation de la benne (4) incluant deux vérins (5) disposés latéralement et extérieurement à la benne, l'extrémité du fût (5a) des vérins étant disposée au milieu du double essieu arrière (2) du camion, l'extrémité (5d) de la tige (5c) du vérin étant solidarisée dans la partie supérieure et bordure (4a) de la benne (4), dans sa partie médiane, le camion étant **caractérisé en ce qu'**il comprend un faux châssis (9) pour assurer la fonction de support, par une poutre transversale (6) et de longerons longitudinaux (9a - 9b), d'une embase (8) solidarisée au fond de la benne, sur tout ou partie de la longueur de celle-ci.

2. Camion selon la revendication 1, **caractérisé en ce que** l'embase (8) présente une face plane (8a) en appui direct sur la poutre et les longerons lorsque la benne est abaissée, ladite embase permettant de protéger le fond de benne et de rendre invisible la tôle de fond de benne.

3. Camion selon la revendication 2, **caractérisé en ce que** des longerons intérieurs (8b) sont disposés dans le volume intérieur de l'embase (8) dans la longueur et sont fixés à la paroi de fond horizontale (8c) de l'embase et à la paroi de fond (4b) de la benne.

## Patentansprüche

1. Lastfahrzeug mit einem Fahrgestell (3), das die Positionierung einer Mulde erlaubt, und zwei Arbeitszylindern, welche die Bewegungen der Mulde erlauben, und einer Schwenkvorrichtung für die Mulde (4) mit zwei seitlich und außen an der Mulde angebrachten Hebeeinrichtungen, wobei das Ende des Schaftes (5a) der Hebeeinrichtungen in der Mitte der Doppelhinterachse (2) des Lastfahrzeuges angeordnet ist, und das Ende (5d) der Stange (5c) der Hebeeinrichtung mit dem oberen Teil und dem Rand (4a) der Mulde in ihrem mittleren Teil verbunden ist, wobei das Lastfahrzeug **dadurch gekennzeichnet ist, dass** es einen Hilfsrahmen (9) besitzt, um durch einen Querträger (6) und Längsträger (9a - 9b) eine Stützfunktion eines Sockels (8), der mit dem Boden der Mulde verbunden ist, über die gesamte oder einen Teil der Länge der Mulde zu gewährleisten.

2. Lastfahrzeug nach Anspruch 1, **dadurch gekennzeichnet, dass** der Sockel (8) eine Planfläche (8a) besitzt, die sich direkt auf dem Querträger und den Längsträgern abstützt, wenn die Mulde abgesenkt ist, wobei der Sockel es ermöglicht, den Muldenboden zu schützen und das Bodenblech der Mulde unsichtbar zu machen.

3. Lastfahrzeug nach Anspruch 2, **dadurch gekennzeichnet, dass** die Innenlängsträger (8b) entlang dem Sockelinnern (8) angeordnet sind, und an der horizontalen Rückwand (8c) des Sockels und an der Rückwand (4b) der Mulde befestigt sind.

## Claims

1. Truck comprising a chassis (3) allowing the positioning of a dump body or bucket, and two hydraulic rams allowing the movement of the said dump body, and a device for articulating the dump body (4) including two rams (5) arranged to the sides and on the outside of the dump body, the end of the barrel (5a) of the rams being arranged in the middle of the twin rear axle (2) of the truck, the end (5d) of the rod (5c) of the ram being secured to the upper and edge part (4a) of the dump body (4), in its middle part, the truck being **characterized in that** it comprises a false chassis (9) to act as a support, by means of a transverse beam (6) and of longitudinal members (9a - 9b), for a base (8) secured to the bottom of the dump body, over all or part of the length thereof.

2. Truck according to Claim 1, **characterized in that** the base (8) has a flat face (8a) bearing directly against the beam and the members when the dump body is lowered, the said base protecting the bottom of the dump body and concealing the dump body bottom plate from view.

3. Truck according to Claim 2, **characterized in that** inner longitudinal members (8b) are arranged inside the interior volume of the base (8) in the length and are fixed to the horizontal bottom wall (8c) of the base and to the bottom wall (4b) of the dump body.
